(19) Europäisches Patentamt
European Patent Office
Office européen des brevets

(11) **EP 2 752 703 A1**

(12) **EUROPEAN PATENT APPLICATION**

(43) Date of publication:
**09.07.2014 Bulletin 2014/28**

(51) Int Cl.:
***G02C 7/06*** (2006.01)

(21) Application number: **13305006.2**

(22) Date of filing: **07.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ESSILOR INTERNATIONAL (Compagnie Générale d'Optique) 94220 Charenton le Pont (FR)**

(72) Inventors:
• **Benoit, Céline**
  **94220 CHARENTON-LE-PONT (FR)**
• **Guilloux, Cyril**
  **94220 CHARENTON-LE-PONT (FR)**

(74) Representative: **Huisman, Aurélien**
  **NOVITECH**
  **4 Rue Charles VII**
  **94130 Nogent sur Marne (FR)**

(54) **Ophthalmic lens having at least a stable zone**

(57)     Ophthalmic lens having a first surface comprising a zone of optical interest, the zone of optical interest comprising at least:
- a far vision control point (FV),
- a near vision control point (NV),
- a main line (M) starting from one end of the zone of optical interest, ending on the opposite end of the zone of optical interest and passing through the far and near vision control points,
wherein the main line (M) comprises at one end a first section (S1) of continuous increase of mean sphere, at the other end a second section (S2) of continuous increase of mean sphere, the first and second section being separated by a third section (S3) of stabilized mean sphere.

Fig. 15a

**Description**

The present invention relates to an ophthalmic lens having a first surface comprising a zone of optical interest and a method of providing an ophthalmic lens to a wearer.

The discussion of the background of the invention herein is included to explain the context of the invention. This is not to be taken as an admission that any of the material referred to was published, known or part of the common general knowledge at the priority date of any of the claims.

An ophthalmic lens is typically made of plastic or glass material and generally has two opposing surfaces which co-operate with one another to provide a required corrective prescription. When the positioning or shape of one of these surfaces with respect to the other is inaccurate, optical errors can appear.

Manufacturing of an ophthalmic lens to the required prescription requirements typically includes machining the surface of a semi-finished lens or lens blank. Typically, a semi-finished lens has a finished surface, for example the front surface and an unfinished surface, for example the back surface. By machining the back surface of the lens to remove material, the required shape and positioning of the back surface with respect to the front surface for the desired corrective prescription can be generated.

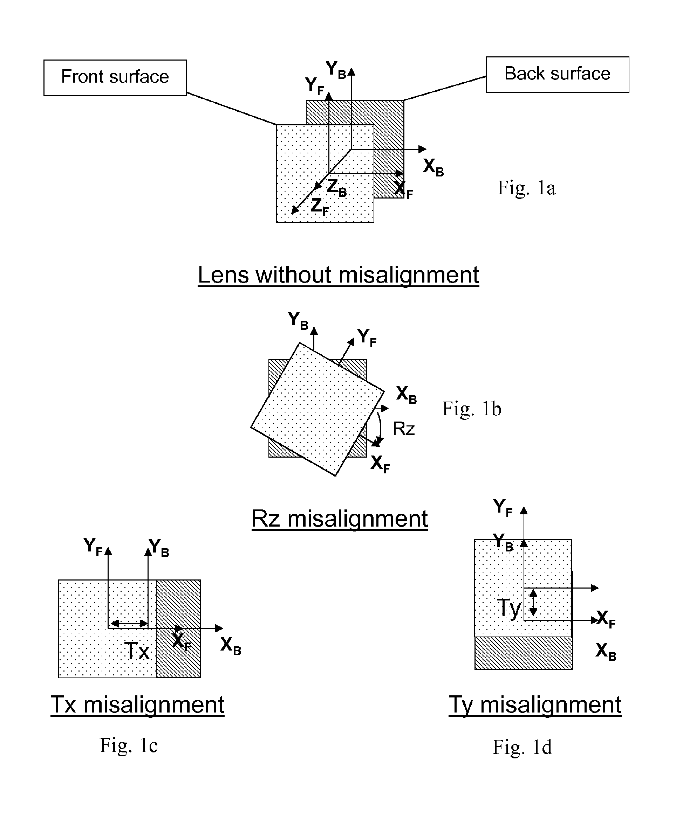

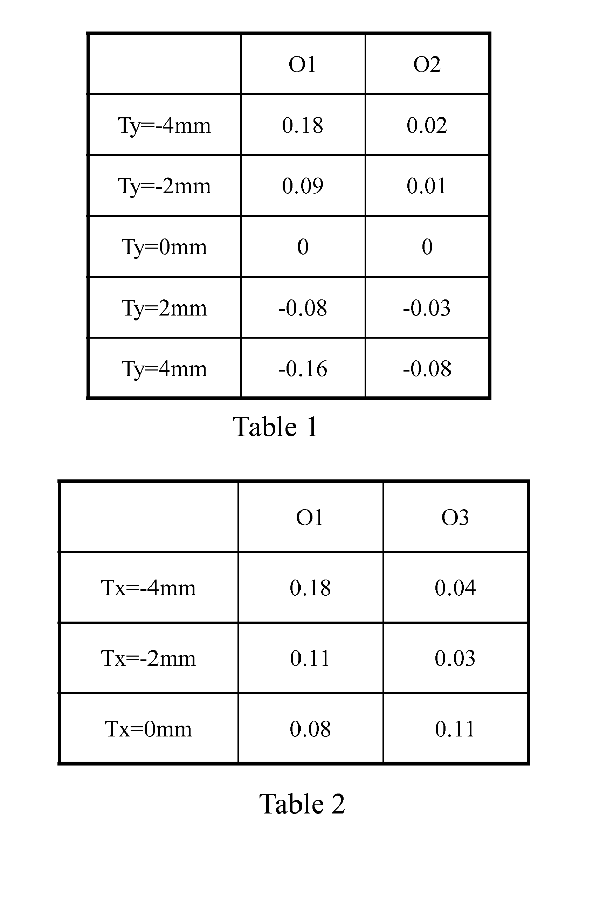

If a misalignment exists between the front and back surfaces of the lens as shown in Figures 1, an unwanted astigmatism is produced everywhere on the lens including in far vision and near vision control points. In particular, at a far vision control point of a wearer, it is more difficult to meet the ISO standard tolerances regarding prescribed astigmatism.

Many conventional manufacturing laboratories for making ophthalmic lenses use standard equipment that has an alignment accuracy between the front and back surfaces that is not as high as is available with high end equipment. As shown in Figure 1a, the front and back surfaces are aligned when their Z axes coincide and the respective X,Y axes are not rotated relative to each other. Figures 1b to 1d show that misalignment between the two lens surfaces can be due to translation along the X axis see Figure 1c, with a value of Tx, translation along the Y axis see figure 1d, with a value of Ty, and/or rotation around the Z axis, with an angle of Rz see figure 1b.

The sensitivity of the optical function of the manufactured optical lens to positioning errors between the two surfaces of the lens depends among other features on the type of design of the finished surface.

The complexity of optical designs of ophthalmic lenses has increase in the recent years, in particular the optical designs are more and more customized according to different parameters of the wearer. Such customization can lead to an increase in the number of different type of semi-finished lens blank. The manufacturing and storing of a great number of type of semi-finished lens blank increase the overall cost of the ophthalmic lens.

To try to reduce the number of type of semi-finished lenses required, some have come up with the idea of manufacturing a semi-finished lens blank with a finished surface comprising a continuous gradual change in spherical power over the entire finished surface. Such semi-finished lens is supposed to be adapted to any type of optical function, the optical function being provided by adapting the design of the opposite surface.

However, the inventors have observed that such design of the finished surface makes the manufacturing method very sensitive to positioning errors. In other words, when manufacturing the opposite surface a small error of position between the two opposite surfaces may have a great impact on the overall optical function of the manufactured optical lens.

According to applicable manufacturing standards such as ISO 8980-2, the finished lens has an astigmatism tolerance of 0.12D at the far vision control point. This requirement must be met after all the potential sources of error have been taken into account. Misalignment is just one such potential source of error. In a conventional laboratory for manufacturing progressive lenses, the alignment accuracy is difficult to minimize without significantly modifying the conventional lens finishing process. As a result, yields for final lenses are significantly reduced when using a semi-finished lens blank with a continuous gradual change in spherical power over the entire finished surface.

A goal of the present invention is to provide an ophthalmic lens that does not present such drawback, in particular that is more robust to positioning errors that may occur between the two surfaces of the lens.

The ophthalmic lens according to the invention has a first surface comprising a zone of optical interest, the zone of optical interest comprising at least:

- a far vision control point,
- a near vision control point,
- a main line starting from one end of the zone of optical interest, ending on the opposite end of the zone of optical interest and passing through the far and near vision control points,

wherein the main line comprises at one end a first section of continuous increase of mean sphere, at the other end a second section of continuous increase of mean sphere, the first and second section being separated by a third section of stabilized mean sphere.

Advantageously, having a section of stabilized mean sphere between two sections of continuous increase, makes the overall optical function of the ophthalmic lens more robust to positioning errors between the two opposite surfaces of the ophthalmic lens.

Furthermore, the ophthalmic lens according to the invention allows reducing the distortion of the overall ophthalmic lens compared to conventional progressive ophthalmic lenses, in particular when the front surface of the ophthalmic lens is regressive.

Since the progression is smoother for an ophthalmic lens according to the invention than a prior art ophthalmic lens and since the addition power of the ophthalmic lens according to the invention is shared between the front and the back surfaces, neither surface should protrude as strikingly as in a one-sided design ophthalmic lens.

The ophthalmic lens according to the invention is easier to manufacture than the prior art ophthalmic lenses since the progression is smoother. According to further embodiments which can be considered alone or in combination:

- the third section of stabilized mean sphere comprises at least the far vision control point or the near vision control point; and/or
- the zone of optical interest further comprises a zone of stabilized mean sphere comprising the third section and having a stabilized mean sphere value at least in a direction perpendicular to the direction of the main line in the third section; and/or
- the continuous increases of mean sphere in the first and second sections are strictly monotone increases; and/or
- the main line comprises a fourth section of continuous increase of mean sphere and a fifth section of stabilized mean sphere and wherein the first to fifth sections are distributed along the main meridian so that two sections of continuous increase of mean sphere are separated by a zone of stabilized mean sphere; and/or
- the third section comprises at least the far vision control point and the fifth section comprises at least the near vision control point; and/or
- the zone of optical interest extends from the far vision control point along the main line of a distance of at least 10 mm and from the near vision control point of a distance of at least 8mm; and/or
- a section of stabilized mean sphere has a length greater than or equal to 4 mm and the variation of mean sphere in the section is smaller than or equal to $\pm$ 0.06 D from the average value of mean sphere over the section, and a section of continuous increase of mean sphere has a slope strictly greater than 0.03D/mm; and/or
- the mean sphere of the zone of optical interest increases from the top of the zone of optical interest to the bottom of the zone of optical interest; and/or
- the mean sphere increases linearly along the main line in the sections of continuous increase of mean sphere; and/or
- the ophthalmic lens comprises a second surface on the opposite side of the optical lens from the first surface, the second surface being an unfinished surface; and/or
- the ophthalmic lens comprises a second surface on the opposite side of the optical lens from the first surface, the first and second surfaces being arranged so as to provide a wearer's prescription.

The invention further relates to a method of providing an ophthalmic lens to a wearer, the method comprising:

- a wearer data providing step during which wearer data comprising at least the wearer's prescription is provided,
- an ophthalmic lens blank providing step during which an ophthalmic lens according to the invention is provided,
- a manufacturing step during which the ophthalmic lens is machined according at least to the wearer data.

According to a further aspect, the invention relates to a computer program product comprising one or more stored sequences of instructions that are accessible to a processor and which, when executed by the processor, causes the processor to carry out the steps of the method according to the invention.

The invention further relates to a computer readable medium carrying one or more sequences of instructions of the computer program product according to the invention.

Furthermore, the invention relates to a program which makes a computer execute the method of the invention.

The invention also relates to a computer-readable storage medium having a program recorded thereon; where the program makes the computer execute the method of the invention.

The invention further relates to a device comprising a processor adapted to store one or more sequence of instructions and to carry out at least one of the steps of the method according to the invention.

Unless specifically stated otherwise, as apparent from the following discussions, it is appreciated that throughout the specification discussions utilizing terms such as "computing", "calculating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Embodiments of the invention will now be described, by way of example only, and with reference to the following drawings in which:

- Figures 1a to 1d depict misalignments between front and back surfaces of an ophthalmic lens;
- Figure 2 illustrates the astigmatism axis $\gamma$ of a lens in the TABO convention;
- Figure 3 illustrates the cylinder axis $\gamma_{AX}$ in a convention used to characterize an aspherical surface;
- Figure 4 illustrates the local sphere along any axis;
- Figure 5 is an illustration of the variation of a local sphere value in accordance with Gauss Formula;
- Figures 6 and 7 show referential defined with respect to micro-markings, for a surface bearing micro-markings and for a surface not bearing the micro-markings respectively;
- Figures 8 and 9 show, diagrammatically, optical systems of eye and lens;
- Figure 10 shows a ray tracing from the center of rotation of the eye;
- Figures 11 and 12 show field vision zones of a lens;
- Figure 13 is a general profile view of a lens according to the invention;
- Figure 14a shows a profile, for the first surface of a prior art ophthalmic lens, of the deviation along the main meridian of the mean sphere value, minimum sphere value and maximum sphere value from the mean sphere value at the far vision control point,
- Figures 14b and 14c are maps for the entire first lens surface associated to Fig. 14a, of the deviation of the mean sphere value from the mean sphere value at the far vision control point and cylinder, respectively;
- Figure 15a shows a profile, for the first surface of an ophthalmic lens according to an embodiment of the invention, of the deviation along the main meridian of the mean sphere value, minimum sphere value and maximum sphere value from the mean sphere value at the far vision control point;
- Figures 15b and 15c are maps for the entire first lens surface associated to Figure 15a, of the deviation of the mean sphere value from the mean sphere value at the far vision control point and cylinder, respectively;
- Figure 16a shows a profile, for the first surface of an ophthalmic lens according to an embodiment of the invention, of the deviation along the main meridian of the mean sphere value, minimum sphere value and maximum sphere value from the mean sphere value at the far vision control point;
- Figures 16b and 16c are maps for the entire first lens surface associated to Figure 16a, of the deviation of the mean sphere value from the mean sphere value at the far vision control point and cylinder, respectively;
- Figure 17 shows a profile, for the first surface of an ophthalmic lens according to an embodiment of the invention, of the deviation along the main meridian of the mean sphere value from the mean sphere value at the far vision control point;
- Figure 18 shows a lens bearing the temporary markings applied by the lens manufacturer;
- Figure 19 shows the zone of optical interest, the far and near vision zones of an optical lens according to the invention; and
- Tables 1 and 2 are comparative tables of the effect of misalignment of the two surfaces of the ophthalmic lenses.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

In the context of the present invention the term "ophthalmic lens" can refer to an uncut lens, a semi-finished lens, or a spectacle lens adapted for a wearer.

A progressive lens comprises at least one but preferably two non-rotationally symmetrical aspheric surfaces, for instance but not limited to, progressive surface, regressive surface, toric or atoric surfaces.

As is known, a minimum curvature $CURV_{min}$ is defined at any point on an aspherical surface by the formula:

$$CURV_{\min} = \frac{1}{R_{\max}}$$

where $R_{\max}$ is the local maximum radius of curvature, expressed in meters and $CURV_{\min}$ is expressed in diopters.

Similarly, a maximum curvature $CURV_{\max}$ can be defined at any point on an aspheric surface by the formula:

$$CURV_{\max} = \frac{1}{R_{\min}}$$

where $R_{\min}$ is the local minimum radius of curvature, expressed in meters and $CURV_{\max}$ is expressed in diopters.

It can be noticed that when the surface is locally spherical, the local minimum radius of curvature $R_{\min}$ and the local maximum radius of curvature $R_{\max}$ are the same and, accordingly, the minimum and maximum curvatures $CURV_{\min}$ and $CURV_{\max}$ are also identical. When the surface is aspherical, the local minimum radius of curvature $R_{\min}$ and the local maximum radius of curvature $R_{\max}$ are different.

From these expressions of the minimum and maximum curvatures $CURV_{\min}$ and $CURV_{\max}$, the minimum and maximum spheres labeled $SPH_{\min}$ and $SPH_{\max}$ can be deduced according to the kind of surface considered.

When the surface considered is the object side surface (also referred to as the front surface), the expressions are the following:

$$SPH_{\min} = (n-1)*CURV_{\min} = \frac{n-1}{R_{\max}} \text{ and } SPH_{\max} = (n-1)*CURV_{\max} = \frac{n-1}{R_{\min}}$$

where n is the index of the constituent material of the lens. If the surface considered is an eyeball side surface (also referred to as the back surface), the expressions are the following:

$$SPH_{\min} = (1-n)*CURV_{\min} = \frac{1-n}{R_{\max}} \text{ and } SPH_{\max} = (1-n)*CURV_{\max} = \frac{1-n}{R_{\min}}$$

where n is the index of the constituent material of the lens.

As is well known, a mean sphere $SPH_{mean}$ at any point on an aspherical surface can also be defined by the formula:

$$SPH_{mean} = \frac{1}{2}\left(SPH_{\min} + SPH_{\max}\right)$$

The expression of the mean sphere therefore depends on the surface considered:

- if the surface is the object side surface, $SPH_{mean} = \frac{n-1}{2}\left(\frac{1}{R_{\min}} + \frac{1}{R_{\max}}\right)$

- if the surface is an eyeball side surface, $SPH_{mean} = \frac{1-n}{2}\left(\frac{1}{R_{\min}} + \frac{1}{R_{\max}}\right)$

- A cylinder CYL is also defined by the formula $CYL = |SPH_{\max} - SPH_{\min}|$.

The characteristics of any aspherical face of the lens may be expressed by the local mean spheres and cylinders.

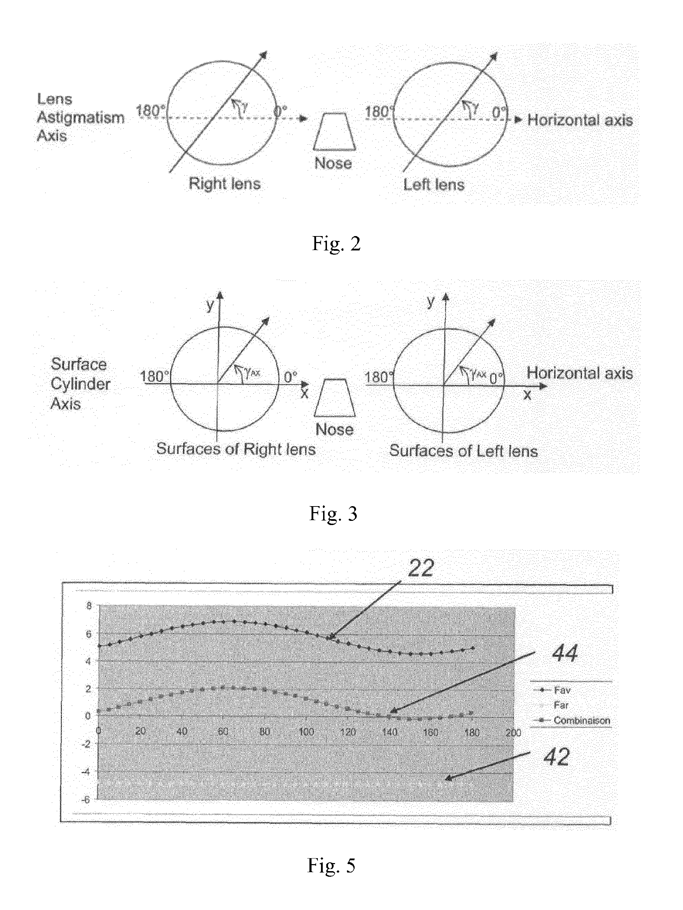

For an aspherical surface, a local cylinder axis $\gamma_{AX}$ may further be defined. Figure 2 illustrates the astigmatism axis $\gamma$ as defined in the TABO convention and figure 3 illustrates the cylinder axis $\gamma_{AX}$ in a convention defined to characterize an aspherical surface.

The cylinder axis $\gamma_{AX}$ is the angle of the orientation of the maximum curvature $CURV_{max}$ with relation to a reference axis and in the chosen sense of rotation. In the above defined convention, the reference axis is horizontal (the angle of this reference axis is 0°) and the sense of rotation is counterclockwise for each eye, when looking at the wearer ($0°\leq\gamma_{AX}\leq180°$). An axis value for the cylinder axis $\gamma_{AX}$ of +45° therefore represents an axis oriented obliquely, which when looking at the wearer, extends from the quadrant located up on the right to the quadrant located down on the left.

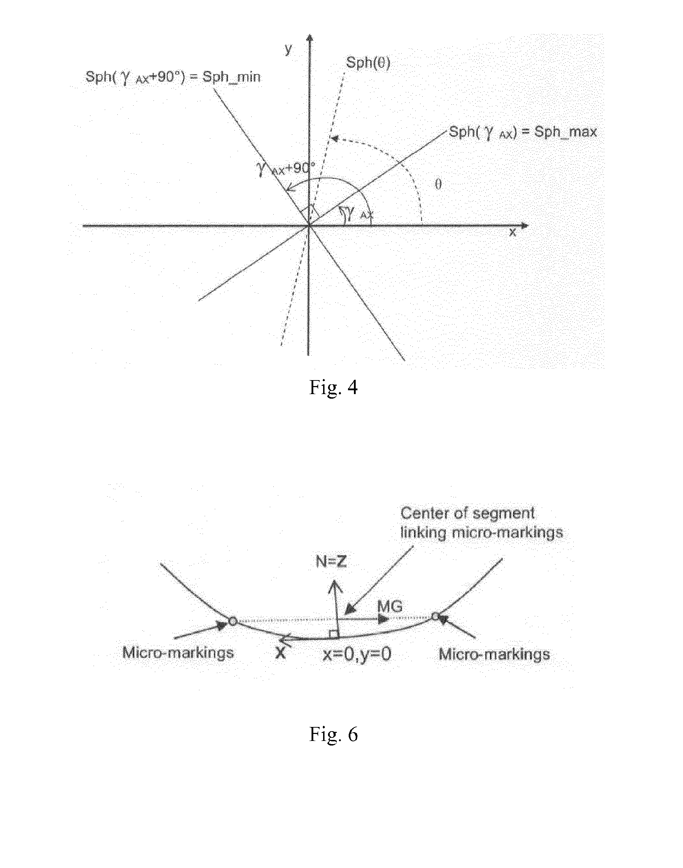

In addition, based on the knowledge of the value of the local cylinder axis $\gamma_{AX}$, Gauss formula enables to express the local sphere SPH along any axis $\theta$, $\theta$ being a given angle in the referential defined in figure 3. The axis $\theta$ is shown in Figure 4.

$$SPH\left(\theta\right) = SPH_{max}\cos^2\left(\theta - \gamma_{AX}\right) + SPH_{min}\sin^2\left(\theta - \gamma_{AX}\right)$$

As expected, when using the Gauss formula, SPH $(\gamma_{AX})$ = $SPH_{max}$ and SPH $(\gamma_{AX}$ +90°) = SPHmin.

The figure 5 is an illustration of such variation for an example of a point of the object surface. This is the curve 22. (An explanation of the other curves depicted in this drawing is provided below.) In this particular case, the maximum sphere is 7.0 $\delta$, the minimum sphere is 5.0 $\delta$ and $y_{AX}$ = 65°.

The Gauss formula can also be expressed in term of curvature so that the curvature CURV along each axis forming an angle è with the horizontal axis by:

$$CURV\left(\theta\right) = CURV_{max}\cos^2\left(\theta - \gamma_{AX}\right) + CURV_{min}\sin^2\left(\theta - \gamma_{AX}\right)$$

A surface may thus be locally defined by a triplet constituted by the maximum sphere $SPH_{max}$, the minimum sphere $SPH_{min}$ and the cylinder axis $\gamma_{AX}$. Alternatively, the triplet may be constituted by the mean sphere $SPH_{mean}$, the cylinder CYL and the cylinder axis $\gamma_{AX}$.

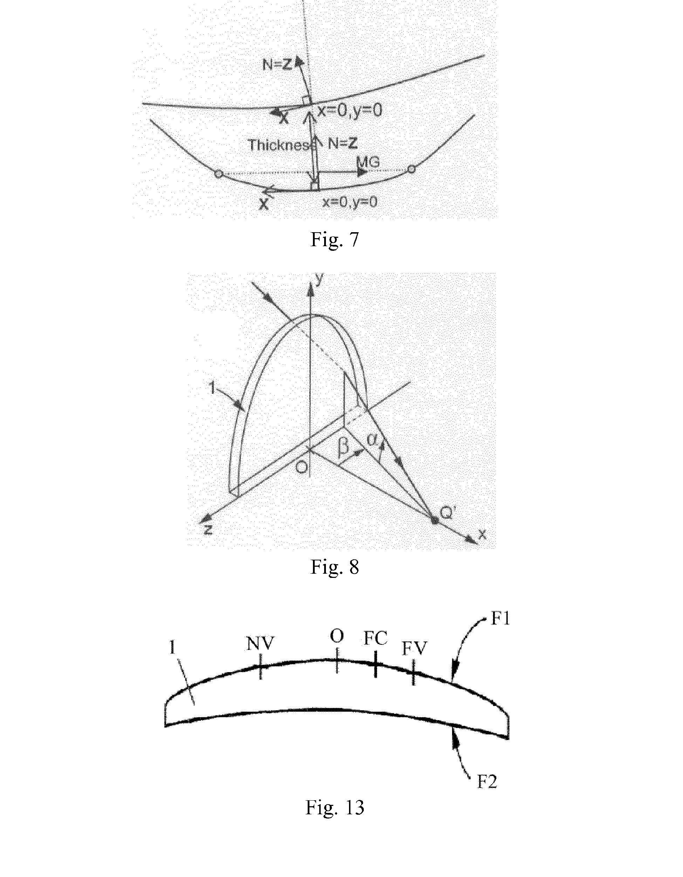

Whenever a lens is characterized by reference to one of its aspherical surfaces, a referential is defined with respect to micro-markings as illustrated in figures 6 and 7, for a surface bearing micro-markings and for a surface not bearing the micro-markings respectively.

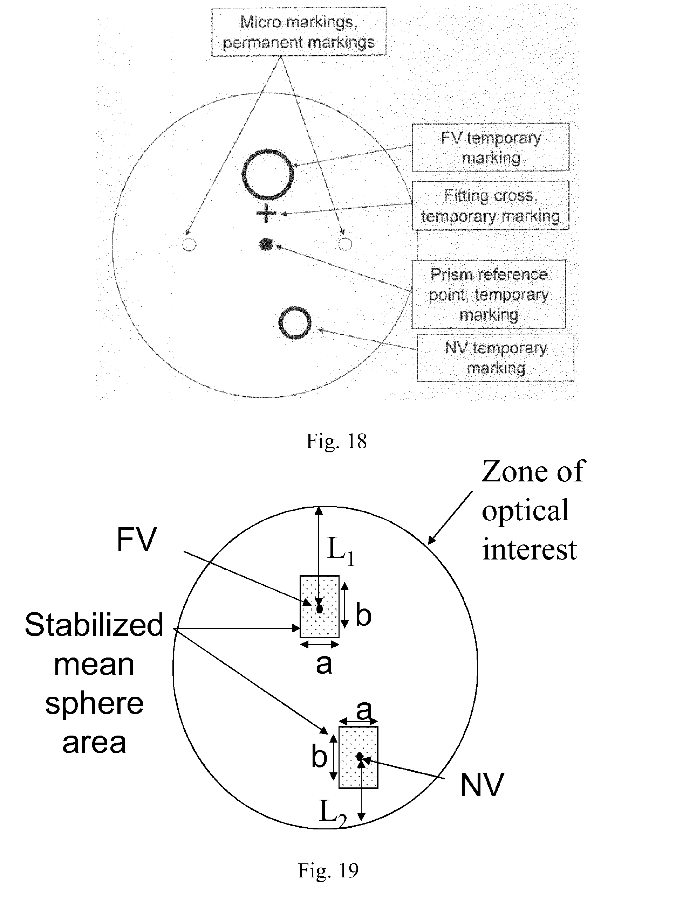

Progressive lenses comprise micro-markings that have been made mandatory by a harmonized standard ISO 8980-2. Temporary markings may also be applied on the surface of the lens, indicating diopter measurement positions (sometimes referred to as control points) on the lens, such as for far vision and for near vision, a prism reference point and a fitting cross for instance, as represented schematically in figure 18. It should be understood that what is referred to herein by the terms far vision control point and near vision control point can be any one of the points included in the orthogonal projection on the first surface of the lens, of respectively the FV and NV temporary markings provided by the lens manufacturer. If the temporary markings are absent or have been erased, it is always possible for a skilled person to position such control points on the lens by using a mounting chart and the permanent micro-markings.

The micro-markings also make it possible to define referential for both surfaces of the lens.

Figure 6 shows the referential for the surface bearing the micro-markings. The center of the surface (x=0, y=0) is the point of the surface at which the normal N to the surface intersects the center of the segment linking the two micro-markings. MG is the collinear unitary vector defined by the two micro-markings. Vector Z of the referential is equal to the unitary normal (Z=N); vector Y of the referential is equal to the vector product of Z by MG; vector X of the referential is equal to the vector product of Y by Z. {X, Y, Z} thereby form a direct orthonormal trihedral. The center of the referential is the center of the surface x=0mm, y=0mm The X axis is the horizontal axis and the Y axis is the vertical axis as it shown in Figure 3.

Figure 7 shows the referential for the surface opposite to the surface bearing the micro-markings. The center of this second surface (x=0, y=0) is the point at which the normal N intersecting the center of the segment linking the two micro-markings on the first surface intersects the second surface. Referential of the second surface is constructed the same way as the referential of the first surface, i.e. vector Z is equal to the unitary normal of the second surface; vector Y is equal to the vector product of Z by MG; vector X is equal to the vector product of Y by Z. As for the first surface, the X axis is the horizontal axis and the Y axis is the vertical axis as it shown in Figure 3. The center of the referential of the surface is also x=0mm, y=0mm.

Similarly, on a semi-finished lens blank, standard ISO 10322-2 requires micro-markings to be applied. The center of the aspherical surface of a semi-finished lens blank can therefore be determined as well as a referential as described above.

Moreover, a progressive multifocal lens may also be defined by optical characteristics, taking into consideration the situation of the person wearing the lenses.

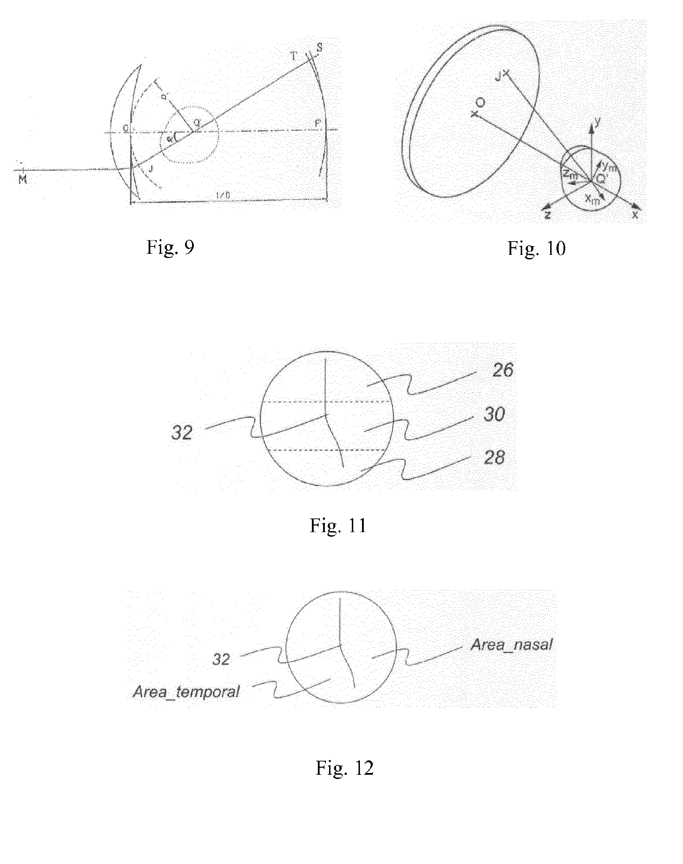

Figures 8 and 9 are diagrammatic illustrations of optical systems of eye and lens, thus showing the definitions used in the description. More precisely, figure 8 represents a perspective view of such a system illustrating parameters $\alpha$ and $\beta$ used to define a gaze direction. Figure 9 is a view in the vertical plane parallel to the antero-posterior axis of the wearer's head and passing through the center of rotation of the eye in the case when the parameter $\beta$ is equal to 0.

The center of rotation of the eye is labeled Q'. The axis Q'F', shown on Figure 9 in a dot-dash line, is the horizontal axis passing through the center of rotation of the eye and extending in front of the wearer - that is the axis Q'F' corresponding to the primary gaze view. This axis cuts the aspherical surface of the lens on a point called the fitting cross, which is present on lenses to enable the positioning of lenses in a frame by an optician. The point of intersection of the rear surface of the lens and the axis Q'F' is the point O. O can be the fitting cross if it is located on the rear surface. An apex sphere, of center Q', and of radius q', is tangential to the rear surface of the lens in a point of the horizontal axis. As examples, a value of radius q' of 25.5 mm corresponds to a usual value and provides satisfying results when wearing the lenses.

A given gaze direction - represented by a solid line on figure 8 - corresponds to a position of the eye in rotation around Q' and to a point J of the apex sphere; the angle $\beta$ is the angle formed between the axis Q'F' and the projection of the straight line Q'J on the horizontal plane comprising the axis Q'F'; this angle appears on the scheme on Figure 8. The angle $\alpha$ is the angle formed between the axis Q'J and the projection of the straight line Q'J on the horizontal plane comprising the axis Q'F'; this angle appears on the scheme on Figures 8 and 9. A given gaze view thus corresponds to a point J of the apex sphere or to a couple $(\alpha, \beta)$. The more the value of the lowering gaze angle is positive, the more the gaze is lowering and the more the value is negative, the more the gaze is rising.

In a given gaze direction, the image of a point M in the object space, located at a given object distance, is formed between two points S and T corresponding to minimum and maximum distances JS and JT, which would be the sagittal and tangential local focal lengths. The image of a point in the object space at infinity is formed, at the point F'. The distance D corresponds to the rear frontal plane of the lens.

Ergorama is a function associating to each gaze direction the usual distance of an object point. Typically, in far vision following the primary gaze direction, the object point is at infinity. In near vision, following a gaze direction essentially corresponding to an angle $\alpha$ of the order of 35° and to an angle $\beta$ of the order of 5° in absolute value toward the nasal side, the object distance is of the order of 30 to 50 cm. For more details concerning a possible definition of an ergorama, US patent US-A-6,318,859 may be considered. This document describes an ergorama, its definition and its modeling method. For a method of the invention, points may be at infinity or not. Ergorama may be a function of the wearer's ametropia.

Using these elements, it is possible to define a wearer optical power and astigmatism, in each gaze direction. An object point M at an object distance given by the ergorama is considered for a gaze direction $(\alpha,\beta)$. An object proximity ProxO is defined for the point M on the corresponding light ray in the object space as the inverse of the distance MJ between point M and point J of the apex sphere:

$$\mathrm{ProxO} = 1/MJ$$

This enables to calculate the object proximity within a thin lens approximation for all points of the apex sphere, which is used for the determination of the ergorama. For a real lens, the object proximity can be considered as the inverse of the distance between the object point and the front surface of the lens, on the corresponding light ray.

For the same gaze direction $(\alpha,\beta)$, the image of a point M having a given object proximity is formed between two points S and T which correspond respectively to minimal and maximal focal distances (which would be sagittal and tangential focal distances). The quantity ProxI is called image proximity of the point M:

$$\mathrm{Pr}\,oxI = \frac{1}{2}\left(\frac{1}{JT} + \frac{1}{JS}\right)$$

By analogy with the case of a thin lens, it can therefore be defined, for a given gaze direction and for a given object proximity, i.e. for a point of the object space on the corresponding light ray, an optical power Pui as the sum of the image proximity and the object proximity.

$Pui = \mathrm{Pr}\,oxO + \mathrm{Pr}\,oxI$

With the same notations, an astigmatism Ast is defined for every gaze direction and for a given object proximity as:

$$Ast = \left| \frac{1}{JT} - \frac{1}{JS} \right|$$

This definition corresponds to the astigmatism of a ray beam created by the lens. It can be noticed that the definition gives, in the primary gaze direction, the classical value of astigmatism. The astigmatism angle, usually called axis, is the angle $\gamma$. The angle $\gamma$ is measured in the frame $\{Q', x_m, y_m, z_m\}$ linked to the eye. It corresponds to the angle with which the image S or T is formed depending on the convention used with relation to the direction $z_m$ in the plane $\{Q', z_m, y_m\}$.

Possible definitions of the optical power and the astigmatism of the lens, in the wearing conditions, can thus be calculated as explained in the article by B. Bourdoncle et al., entitled "Ray tracing through progressive ophthalmic lenses", 1990 International Lens Design Conference, D.T. Moore ed., Proc. Soc. Photo. Opt. Instrum. Eng. Standard wearing conditions are to be understood as the position of the lens with relation to the eye of a standard wearer, notably defined by a pantoscopic angle of +8°, a lens-pupil distance of 12 mm, a pupil-eye rotation center of 13.5 mm and a wrap angle of 0°. The pantoscopic angle is the angle in the vertical plane between the optical axis of the spectacle lens and the visual axis of the eye in the primary position, usually taken to be the horizontal. The wrap angle is the angle in the horizontal plane between the optical axis of the spectacle lens and the visual axis of the eye in the primary position, usually taken to be the horizontal. Other conditions may be used. Wearing conditions may be calculated from a ray-tracing program, for a given lens. Further, the optical power and the astigmatism may be calculated so that the prescription is either fulfilled at the reference points (i.e control points in far vision) and for a wearer wearing his spectacles in the wearing conditions or measured by a frontofocometer.

Figure 10 represents a perspective view of a configuration wherein the parameters $\alpha$ and $\beta$ are non zero. The effect of rotation of the eye can thus be illustrated by showing a fixed frame $\{x, y, z\}$ and a frame $(x_m, y_m, z_m)$ linked to the eye. Frame $\{x, y, z\}$ has its origin at the point Q'. The axis x is the axis Q'O and it is oriented from the lens toward the eye. The y axis is vertical and oriented upwardly. The z axis is such that the frame $\{x, y, z\}$ be orthonormal and direct. The frame $\{x_m, y_m, z_m\}$ is linked to the eye and its center is the point Q'. The $x_m$ axis corresponds to the gaze direction JQ'. Thus, for a primary gaze direction, the two frames $\{x, y, z\}$ and $\{x_m, y_m, z_m\}$ are the same. It is known that the properties for a lens may be expressed in several different ways and notably in surface and optically. A surface characterization is thus equivalent to an optical characterization. In the case of a blank, only a surface characterization may be used. It has to be understood that an optical characterization requires that the lens has been machined to the wearer's prescription. In contrast, in the case of an ophthalmic lens, the characterization may be of a surface or optical kind, both characterizations enabling to describe the same object from two different points of view. Whenever the characterization of the lens is of optical kind, it refers to the ergorama-eye-lens system described above. For simplicity, the term 'lens' is used in the description but it has to be understood as the 'ergorama-eye-lens system'. The value in surface terms can be expressed with relation to points. The points are located with the help of abscissa or ordinate in a frame as defined above with respect to figures 3, 6 and 7.

The values in optic terms can be expressed for gaze directions. Gaze directions are usually given by their degree of lowering and azimuth in a frame whose origin is the center of rotation of the eye. When the lens is mounted in front of the eye, a point called the fitting cross is placed before the pupil or before the eye rotation center Q' of the eye for a primary gaze direction. The primary gaze direction corresponds to the situation where a wearer is looking straight ahead. In the chosen frame, the fitting cross corresponds thus to a lowering angle $\alpha$ of 0° and an azimuth angle $\beta$ of 0° whatever surface of the lens the fitting cross is positioned - rear surface or front surface.

The above description made with reference to figures 8-10 was given for central vision. In peripheral vision, as the gaze direction is fixed, the center of the pupil is considered instead of center of rotation of the eye and peripheral ray directions are considered instead of gaze directions. When peripheral vision is considered, angle $\alpha$ and angle $\beta$ correspond to ray directions instead of gaze directions.

In the remainder of the description, terms like « up », « bottom », « horizontal », « vertical », « above », « below », or other words indicating relative position may be used.

These terms are to be understood in the wearing conditions of the lens. Notably, the "upper" part of the lens corresponds to a negative lowering angle $\alpha < 0°$ and the "lower" part of the lens corresponds to a positive lowering angle $\alpha > 0°$. Similarly, the "upper" part of the surface of a lens - or of a semi-finished lens blank - corresponds to a positive value along the y axis, and preferably to a value along the y axis superior to the y_value at the fitting cross and the "lower" part of the surface of a lens - or of a semi-finished lens blank - corresponds to a negative value along the y axis in the frame as defined above with respect to figures 3, 6 and 7, and preferably to a value along the y axis inferior to the y_value at the fitting cross.

The visual field zones seen through a lens are schematically illustrated in figures 11 and 12. The lens comprises a far vision zone 26 located in the upper part of the lens, a near vision zone 28 located in the lower part of the lens and an intermediate zone 30 situated in the lower part of the lens between the far vision zone 26 and the near vision zone 28. The lens also has a main line 32 passing through the three zones and defining a nasal side and a temporal side.

This main line, as referred to as meridian line, links an upper edge and a lower edge of the lens, passing successively through the far vision control point, the fitting cross, the prism reference point and the near vision control point.

The lens is adapted to be disposed in front of the eye of a wearer so that a scanning of the main gaze direction of the wearer through the lens defines a meridian line. This meridian line corresponds to the locus of the intersection of the main gaze direction with the surface of the lens. As represented on figure 13, an ophthalmic lens comprises a first face F1 and a second face, F2 opposite to the first face F1. Between these two faces, a refringent transparent medium is constituted which is usually homogenous. The lens can be a finished spectacles eyeglass, the two faces F1 and F2 of which have definitive shapes.

The first surface comprises a zone of optical interest, the zone of optical interest comprising at least:

- a far vision control point FV,
- a near vision control point NV,
- a main line M starting from one end of the zone of optical interest, ending on the opposite end of the zone of optical interest and passing through the far and near vision control points.

As illustrated on figure 19, the zone of optical interest may extend from the far vision control point along the main line of a distance $L_1$ of at least 10 mm and from the near vision control point of a distance $L_2$ of at least 8mm.

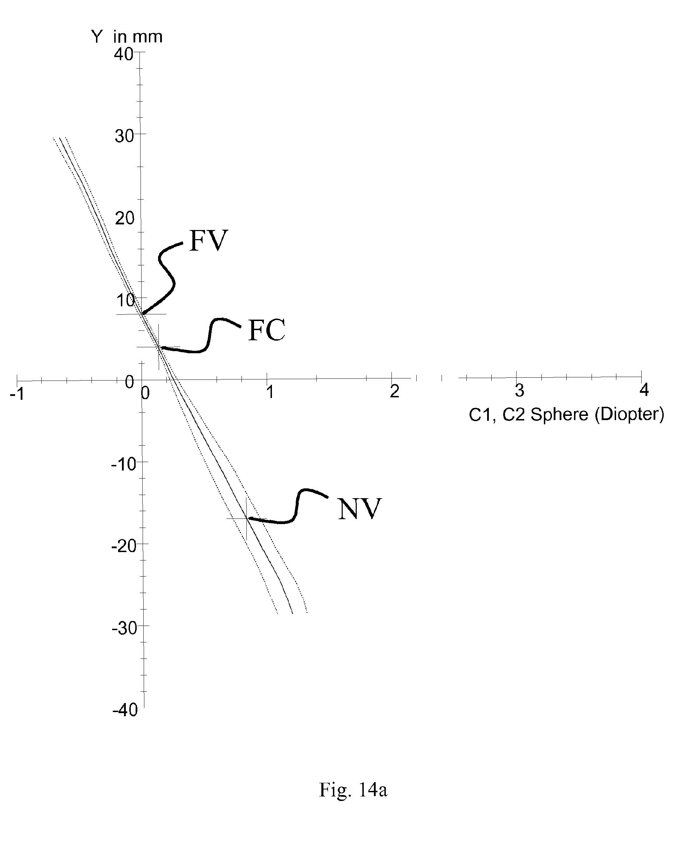

The diagrams in figures 14a, 15a, 16a and 17 show profiles, for the first surface of different ophthalmic lenses, of the deviation along the main meridian of the mean sphere value in solid line, minimum sphere value and maximum sphere value, in dotted line, from the sphere value at the far vision control point.

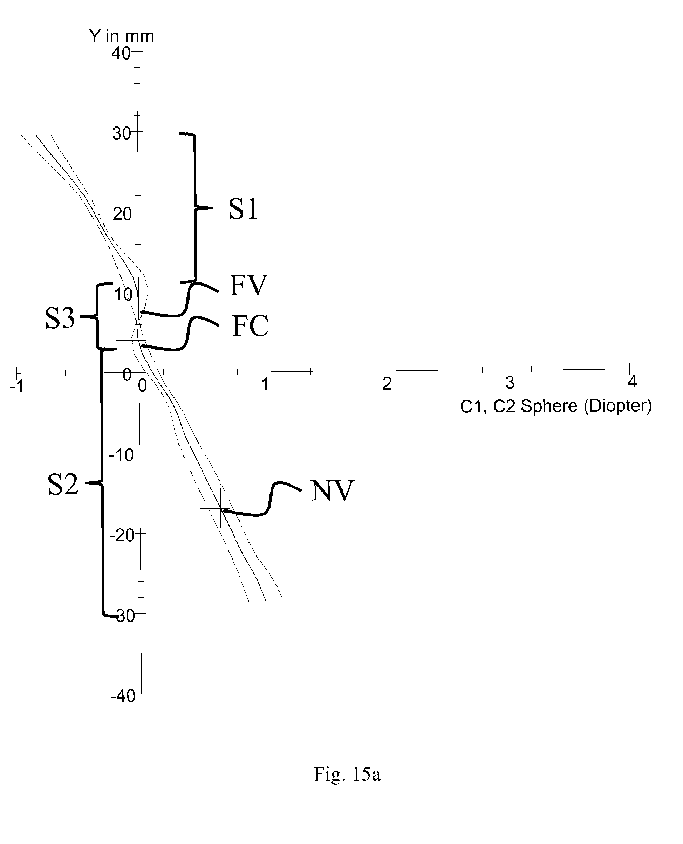

The diagrams in figures 14a corresponds to a prior art ophthalmic lens. The diagrams in figures 15a, 16a and 17 correspond to examples of ophthalmic lenses according to the invention.

As illustrated in figure 14a, the mean sphere along the main line M continuously increases without any stabilized zone.

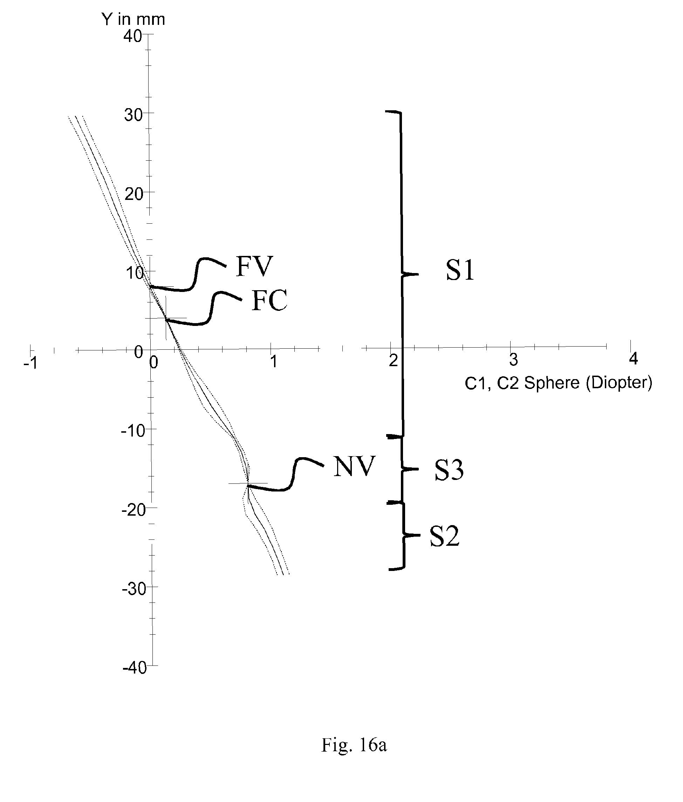

Whereas as illustrated in figures 15a and 16a, the main line M comprises at one end a first section S1 of continuous increase of mean sphere, at the other end a second section S2 of continuous increase of mean sphere, the first and second section being separated by a third section S3 of stabilized mean sphere.

According to an embodiment of the invention, a section of stabilized mean sphere has a length greater than or equal to 4 mm and the variation of mean sphere in the section is smaller than or equal to $\pm$ 0.06 D from the average value of mean sphere over the section, for example smaller than or equal to $\pm$ 0.04 D from the average value of mean sphere over the section.

A section of continuous increase of mean sphere has a slope strictly greater than 0.03D/mm, for example strictly greater than 0.02D/mm.

As illustrated on figure 15a, the stabilized zone S3 comprises the far vision control point. As illustrated on figure 16a, the stabilized zone S3 comprises the near vision control point.

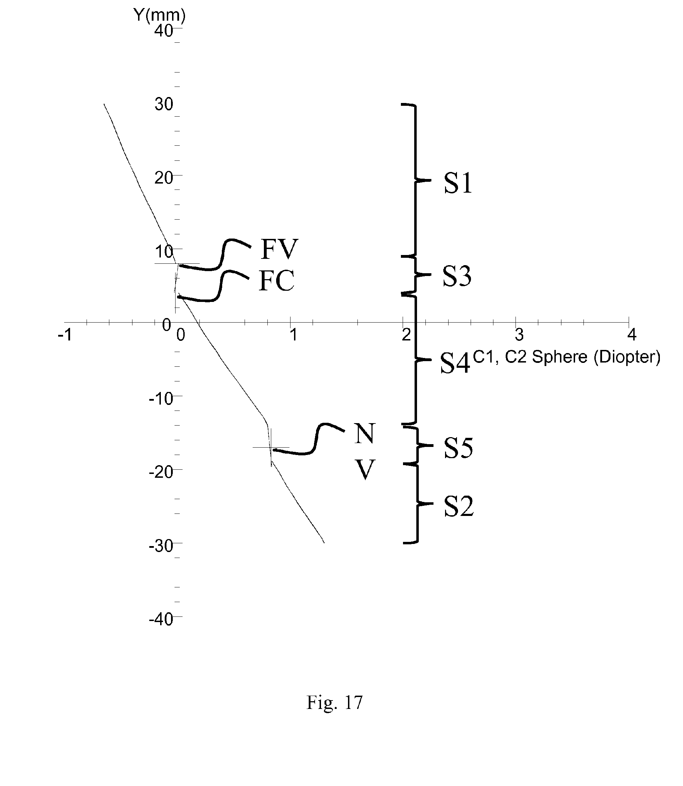

According to a further embodiment represented on figure 17, the main line M may further comprise a fourth section S4 of continuous increase of mean sphere and a fifth section S5 of stabilized mean sphere and wherein the first to fifth sections are distributed along the main meridian so that two sections of continuous increase of mean sphere are separated by a zone of stabilized mean sphere. Preferably, the third section S3 comprises at least the far vision control point FV and the fifth section S5 comprises at least the near vision control point NV.

As illustrated on figures 15a, 16a and 17, the continuous increase in the increase sections (S1, S2, S4) is preferably strictly monotone, linear and increases from the top of the zone of optical interest to the bottom of the zone of optical interest.

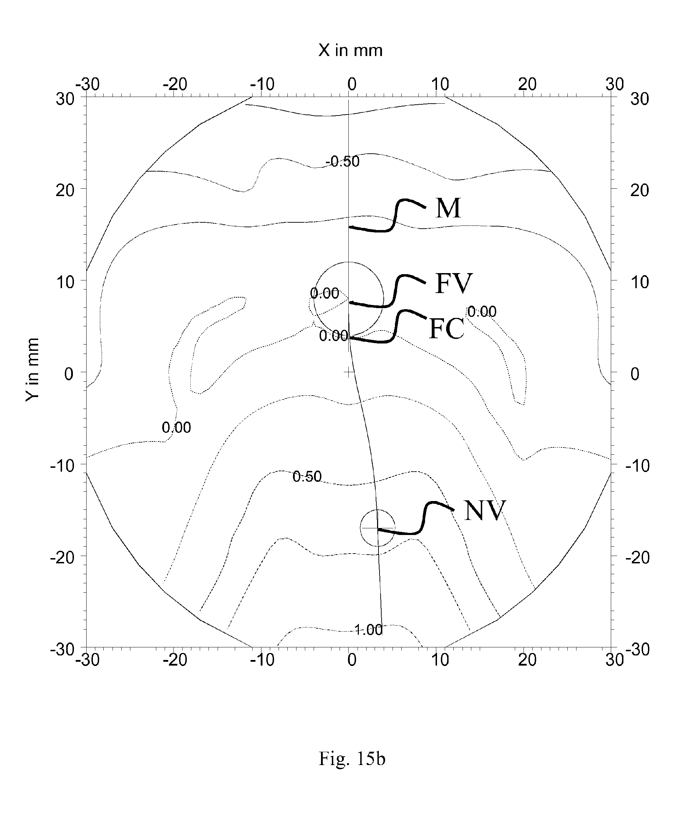

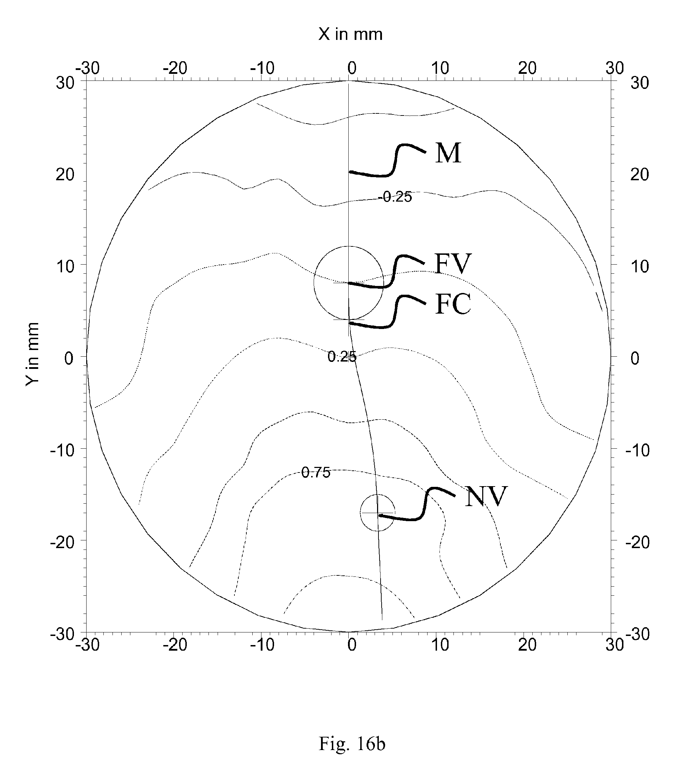

FIGS. 15b and 16b are maps for the entire first lens surface associated to figure 15a and 16a, of the deviation of the mean sphere value from the mean sphere value at the far vision control point. Each of these maps is limited by the peripheral edge of the corresponding lens, and shows the mean sphere value for each point of the rear face of the lens. The lines reproduced on these maps are isosphere lines, linking points of the rear face of each lens which correspond to the same mean sphere value. This value is given in diopters for certain of these lines.

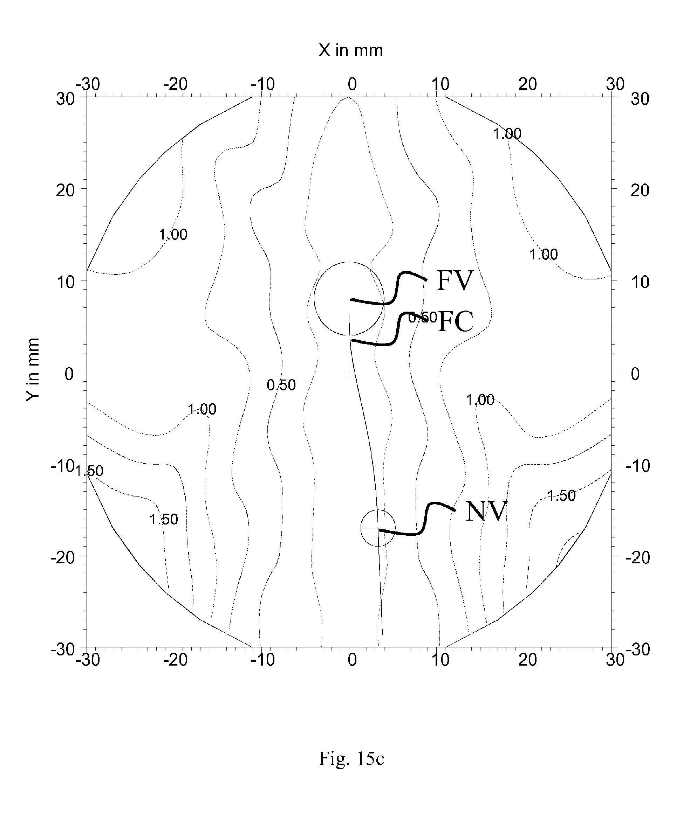

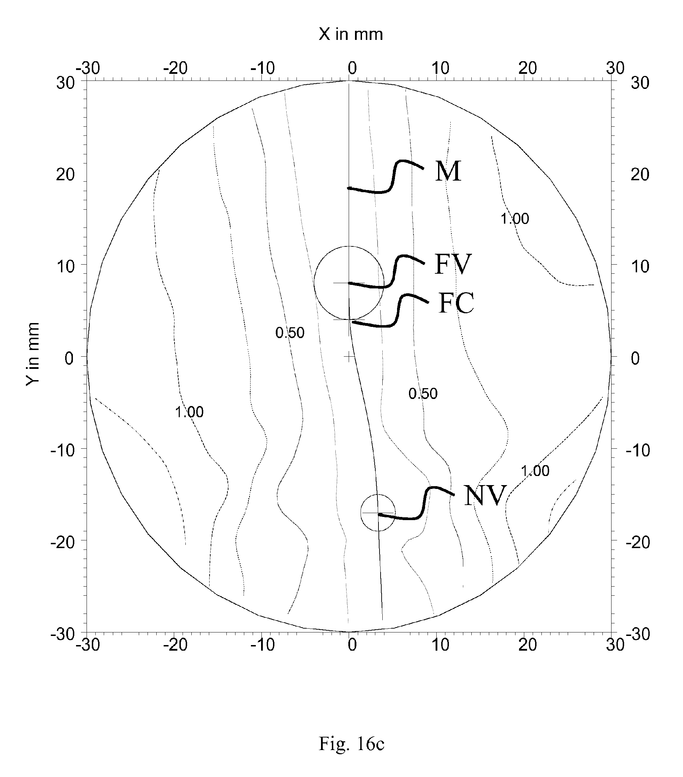

Similarly, FIGS. 15c and 16c are cylinder maps. The lines reproduced thereon are isocylinder lines, linking points of the rear face of each lens which correspond to the same cylinder value.

As it appears on FIGS. 15b and 16b, the zone of optical interest further comprises a zone of stabilized mean sphere comprising the third section S3 and having a stabilized means sphere value at least in a direction perpendicular to the direction of the main line in the third section S3.

As shown on figure 19, a zone of stabilized mean sphere may be defined by a reference width 'a' and a reference height 'b', the FV or NV control point being centred at its respective part of the stabilized area defined by the reference distance 'a' and the reference distance 'b'.

For the first part of the spherical area including the far vision control point, the reference distance 'a' may be set to be greater than two times a misalignment error (Tx) in the X axis direction of the lens due to the manufacturing process, and the reference distance 'b' is set to be greater than two times a misalignment error (Ty) in the Y axis direction of the lens due to the manufacturing process, and for the second part of the spherical area including the near vision control point, the reference distance 'a' is greater than two times the misalignment error (Tx), and the reference distance 'b' is greater than two times the misalignment error (Ty).

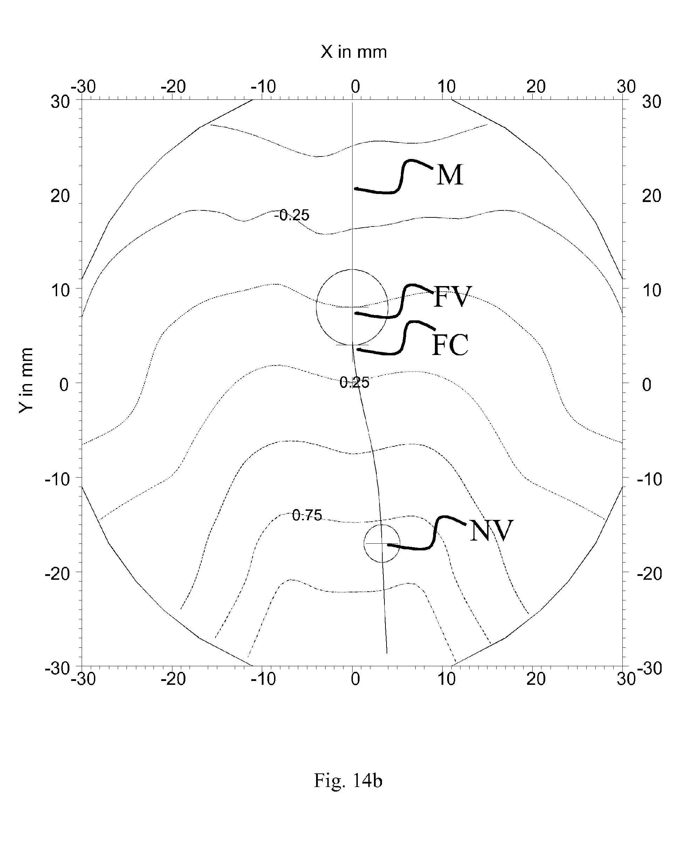

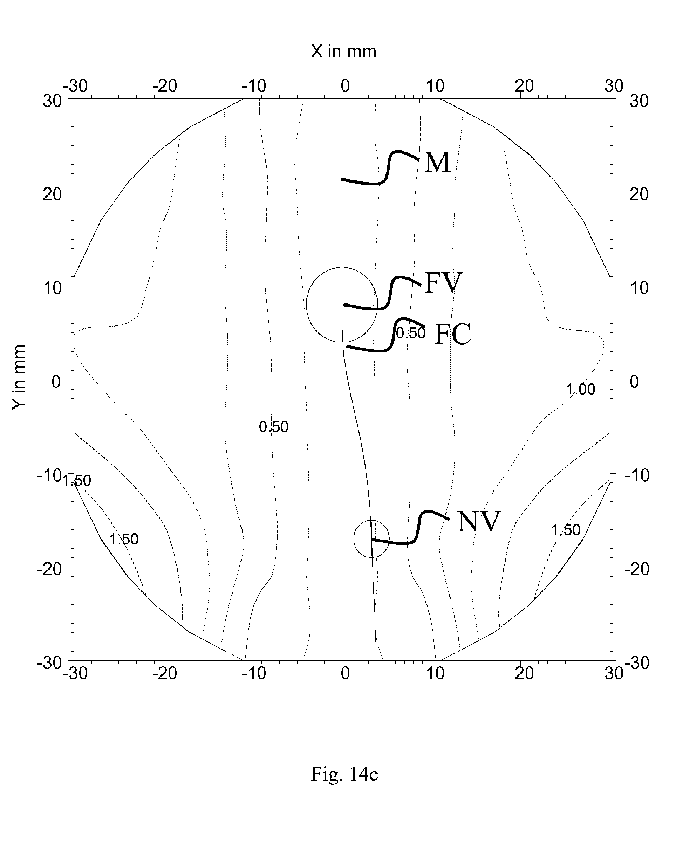

The inventors have compared the sensitivity to misalignment in the X and Y axis direction ophthalmic lenses according to the invention with the prior art ophthalmic lens illustrated on FIGS. 14a, 14b and 14c.

The inventors have simulated ophthalmic lenses corresponding to a prescribed plano ADD 2.00 with a standard design having a first surface corresponding respectively to the surfaces represented on Figs 14, 15 and 16. Different misalignments in the X and Y axis directions have been introduced and the effect of such misalignments on the final optical function of the ophthalmic lens has been evaluated.

Table 1 illustrates the value of the optical power at the far vision control point of two types of ophthalmic lenses O1 and 02. O1 correspond to prior art ophthalmic lenses having a first surface as represented on figured 14. 02 correspond to ophthalmic lenses according to the invention having a first surface as represented on figures 15. Each ophthalmic lens has been simulated with different misalignments in the Y axis direction.

Table 2 illustrates the value of the optical power at the near control point of two types of ophthalmic lenses O1 and 03. O1 correspond to prior art ophthalmic lenses having a first surface as represented on figures 14. 03 correspond to ophthalmic lenses according to the invention having a first surface as represented on figures 16. Each ophthalmic lens has been simulated with different misalignments in the X axis direction.

As illustrated in tables 1 and 2, the ophthalmic lenses according to the invention are more robust to misalignment than the prior art ophthalmic lenses. Therefore, the ophthalmic lenses according to the invention may be produce more easily and the rate of unacceptable ophthalmic lenses due to misalignments issues can be reduced. Furthermore, the needs of the wearer in terms of correction at the near and far vision control points may be more accurately reached.

Many modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

**Claims**

1. Ophthalmic lens having a first surface comprising a zone of optical interest, the zone of optical interest comprising at least:

   - a far vision control point (FV),
   - a near vision control point (NV),
   - a main line (M) starting from one end of the zone of optical interest, ending on the opposite end of the zone of optical interest and passing through the far and near vision control points,
   wherein the main line (M) comprises at one end a first section (S1) of continuous increase of mean sphere, at the other end a second section (S2) of continuous increase of mean sphere, the first and second section being separated by a third section (S3) of stabilized mean sphere.

2. The ophthalmic lens according to claim 1, wherein the third section (S3) of stabilized mean sphere comprises at least the far vision control point (FV) or the near vision control point (NV).

3. The ophthalmic lens according to claim 1 or 2, wherein the zone of optical interest further comprises a zone of stabilized mean sphere comprising the third section (S3) and having a stabilized means sphere value at least in a direction perpendicular to the direction of the main line in the third section (S3).

4. The ophthalmic lens according to any of the preceding claims, wherein the continuous increases of mean sphere in the first and second sections are strictly monotone increases.

5. The ophthalmic lens according to any of the preceding claims, wherein the main line (M) comprises a fourth section (S4) of continuous increase of mean sphere and a fifth section (S5) of stabilized mean sphere and wherein the first to fifth sections are distributed along the main meridian so that two sections of continuous increase of mean sphere are separated by a zone of stabilized mean sphere.

6.  The ophthalmic lens according to claim 5, wherein the third section (S3) comprises at least the far vision control point (FV) and the fifth section (S5) comprises at least the near vision control point (NV).

7.  The ophthalmic lens according to any of the preceding claims, wherein the zone of optical interest extends from the far vision control point along the main line of a distance of at least 10 mm and from the near vision control point of a distance of at least 8mm.

8.  The ophthalmic lens according to any of the preceding claims, wherein a section of stabilized mean sphere has a length greater than or equal to 4 mm and the variation of mean sphere in the section is smaller than or equal to $\pm$ 0.06 D from the average value of mean sphere over the section, and a section of continuous increase of mean sphere has a slope strictly greater than 0.03D/mm.

9.  The ophthalmic lens according to any of the preceding claims, wherein the mean sphere of the zone of optical interest increases from the top of the zone of optical interest to the bottom of the zone of optical interest.

10. The ophthalmic lens according to any of the preceding claims, wherein mean sphere increases linearly along the main line in the sections of continuous increase of mean sphere.

11. The ophthalmic lens according to any of the preceding claims, wherein the ophthalmic lens comprises a second surface on the opposite side of the optical lens from the first surface, the second surface being an unfinished surface.

12. The ophthalmic lens according to any of claims 1 to 10, wherein the ophthalmic lens comprises a second surface on the opposite side of the optical lens from the first surface, the first and second surfaces being arranged so as to provide a wearer's prescription.

13. Method of providing an ophthalmic lens to a wearer, the method comprising:

    - a wearer data providing step during which wearer data comprising at least the wearer's prescription is provided,
    - an ophthalmic lens blank providing step during which an optical lens according to claim 11 is provided,
    - a manufacturing step during which the ophthalmic lens is machined according at least to the wearer data.

14. A computer program product comprising one or more stored sequences of instructions that are accessible to a processor and which, when executed by the processor, causes the processor to carry out the steps of claim 13.

15. A computer readable medium carrying one or more sequences of instructions of the computer program product of claim 14.

Lens without misalignment

Fig. 1a

Rz misalignment

Fig. 1b

Tx misalignment

Fig. 1c

Ty misalignment

Fig. 1d

Fig. 2

Fig. 3

Fig. 5

Fig. 4

Fig. 6

Fig. 7

Fig. 8

Fig. 13

Fig. 9

Fig. 10

Fig. 11

Fig. 12

Fig. 14a

X in mm

Fig. 14b

Fig. 14c

Fig. 15a

Fig. 15b

Fig. 15c

Fig. 16a

Fig. 16b

Fig. 16c

Fig. 17

|  | O1 | O2 |
|---|---|---|
| Ty=-4mm | 0.18 | 0.02 |
| Ty=-2mm | 0.09 | 0.01 |
| Ty=0mm | 0 | 0 |
| Ty=2mm | -0.08 | -0.03 |
| Ty=4mm | -0.16 | -0.08 |

## Table 1

|  | O1 | O3 |
|---|---|---|
| Tx=-4mm | 0.18 | 0.04 |
| Tx=-2mm | 0.11 | 0.03 |
| Tx=0mm | 0.08 | 0.11 |

## Table 2

Micro markings,
permanent markings

FV temporary
marking

Fitting cross,
temporary marking

Prism reference
point, temporary
marking

NV temporary
marking

Fig. 18

Zone of
optical
interest

FV

Stabilized
mean
sphere
area

$L_1$

b

a

a

b

$L_2$

NV

Fig. 19

Europäisches
Patentamt

European
Patent Office

Office européen
des brevets

# EUROPEAN SEARCH REPORT

**Application Number**

EP 13 30 5006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 796 988 A (DUFOUR MAURICE [FR] ET AL) 10 January 1989 (1989-01-10) * figure 1 * | 1-15 | INV. G02C7/06 |
| X | US 5 691 798 A (SMITH SCOTT W [US]) 25 November 1997 (1997-11-25) * figure 7 * | 1-15 | |
| X | EP 0 202 559 A1 (ZEISS CARL FA [DE]; ZEISS STIFTUNG [DE]) 26 November 1986 (1986-11-26) * figure 2a * | 1-15 | |
| X | US 2 878 721 A (KANOLT CLARENCE W) 24 March 1959 (1959-03-24) * figure 3 * | 1-15 | |

**TECHNICAL FIELDS SEARCHED (IPC)**

G02C

The present search report has been drawn up for all claims

| Place of search | Date of completion of the search | Examiner |
|---|---|---|
| Munich | 12 June 2013 | de Lajarte, Gilles |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 5006

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2013

| Patent document cited in search report | | Publication date | Patent family member(s) | | Publication date |
|---|---|---|---|---|---|
| US 4796988 | A | 10-01-1989 | DE | 3625526 A1 | 26-03-1987 |
| | | | FR | 2587505 A1 | 20-03-1987 |
| | | | US | 4796988 A | 10-01-1989 |
| US 5691798 | A | 25-11-1997 | JP | H09159976 A | 20-06-1997 |
| | | | US | 5691798 A | 25-11-1997 |
| EP 0202559 | A1 | 26-11-1986 | AU | 589660 B2 | 19-10-1989 |
| | | | AU | 6066886 A | 04-02-1988 |
| | | | DE | 3517321 A1 | 20-11-1986 |
| | | | EP | 0202559 A1 | 26-11-1986 |
| | | | JP | S6230216 A | 09-02-1987 |
| | | | US | 4786160 A | 22-11-1988 |
| US 2878721 | A | 24-03-1959 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6318859 A

**Non-patent literature cited in the description**

- Ray tracing through progressive ophthalmic lenses. **B. BOURDONCLE et al.** Proc. Soc. Photo. Opt. Instrum. Eng. 1990